(19) Europäisches Patentamt
European Patent Office
Office européen des brevets

(11) **EP 2 587 453 A1**

(12) **EUROPEAN PATENT APPLICATION**

(43) Date of publication:
**01.05.2013 Bulletin 2013/18**

(51) Int Cl.:
***G06T 11/00*** *(2006.01)*

(21) Application number: **12397528.6**

(22) Date of filing: **30.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.10.2011 FI 20116065**
**31.10.2011 US 201113285140**

(71) Applicant: **Eigenor Oy**
**99600 Sodankylä (FI)**

(72) Inventors:
• **Markkanen, Markku**
**FI-99600 SODANKYLÄ (FI)**
• **Vierinen, Juha**
**FI-99600 SODANKYLÄ (FI)**

(74) Representative: **Brax, Matti Juhani**
**Berggren Oy Ab**
**P.O. Box 16**
**00101 Helsinki (FI)**

(54) **Method and apparatus for performing tomographic reconstruction**

(57) A method and apparatus are disclosed for performing tomographic reconstruction. An object to be examined is represented with a tomographic model that comprises grid points. A set of measurement data represents attenuation experienced by radiation that propagated through parts of the object to be examined. Statistical inversion is applied to convert said set of measurement data into a calculated distribution of attenuation values associated with at least a number of said grid points. Applying statistical inversion comprises associating values of a prior with said grid points, which prior comprises at least one regularization parameter. The values of said prior for different grid points come from using different values of said regularization parameter. The method comprises producing an image representation of said calculated distribution of attenuation values.

Fig.7

EP 2 587 453 A1

**Description**

TECHNICAL FIELD

The invention concerns in general the reconstruction of tomographic images or other sets of object-describing information through the use of statistical inversion. Especially the invention concerns a particular way of using prior information to regularize the reconstruction problem.

BACKGROUND OF THE INVENTION

Tomographic imaging as a general concept means producing an image of internal structures of an essentially solid object by observing how certain transmitted waves (e.g., acoustic or electromagnetic) or particle beams behave when they pass through such structures. A typical application is medical X-ray tomography, in which the object is a living organism or a part thereof, and the waves used for irradiation are X-rays in the range from a few to some tens of keV or even around a hundred keV. The objective of the imaging process is to make diagnostic observations about such properties of the object that are not readily seen on the surface. Other applications of tomography include, but are not limited to, various industrial processes, in which it is useful to obtain knowledge about what is hidden inside a piece of raw material or a certain product. For example, log tomography aims at examining logs prior to sawing so that each log could be sawed into planks in the most optimal way.

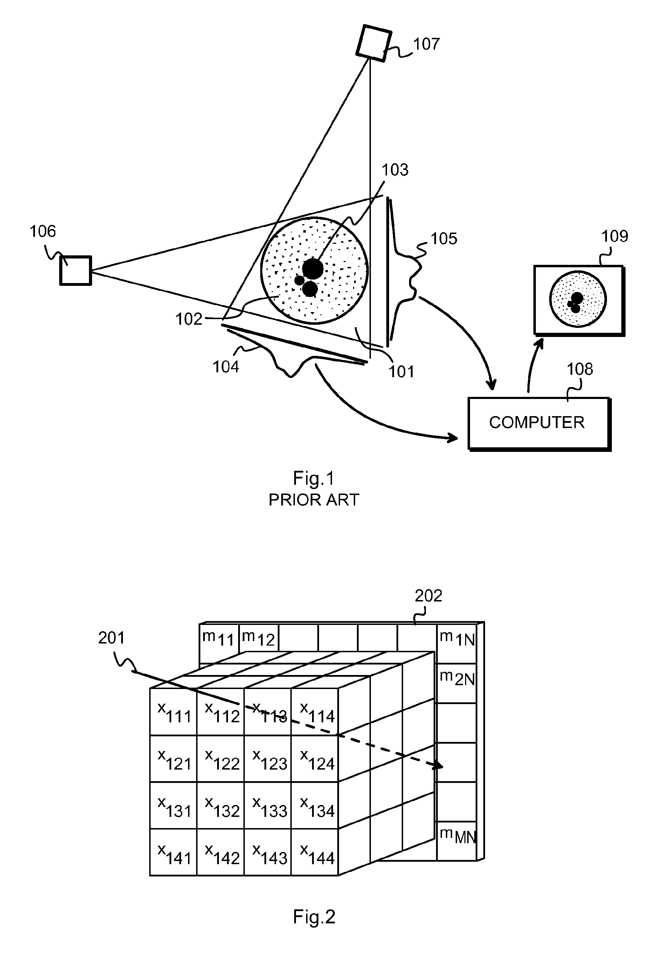

Fig. 1 illustrates a basic principle of what is known as computerised tomography with sparse angle data in two dimensions. An object 102 is irradiated from a limited number of directions with a radiation source, which in Fig. 1 is shown in two exemplary positions 106 and 107. A spatially sensitive detector, shown correspondingly in two positions 104 and 105, gives spatially bound attenuation information for each exposure. In Fig. 1 the circular regions 103 inside the object 102 are assumed to attenuate radiation more than the bulk of the object. Also, the region 101 outside the object is also assumed to have a different attenuation than the bulk of the object. The readings from the detector and the corresponding irradiation angles are taken into a computer 108, which uses a mathematical reconstruction method to calculate what sort of configuration of attenuation regions is located inside the object 101 in order to give just these particular attenuation profiles. The result of the calculation, which essentially represents an attenuation coefficient map of a two-dimensional slice of the object 102, is shown on a display 109.

Various approaches have been suggested for use as the mathematical reconstruction method that converts the obtained measurement results into an image of the object. Reconstruction algorithms that have been known and successfully used include filtered backprojection (FBP), least squares fitting, maximum likelihood estimation, algebraic reconstruction technique (ART), simultaneous iterative ART (SIRT), and multiplicative ART (MART). All of these work reasonably well if the number of views taken from different directions is large and the views cover a wide range of angles around the object. However, taking many exposures means exposing the imaged object to a high dose of harmful ionising radiation, causing unnecessary potential harm to the patient or imaged object. Adding more angles also complicates the device, making it more expensive to design and build. In many tomographic imaging cases, it is also impossible to form a sufficient number of measurement angles to make traditional reconstruction algorithms practical.

Perhaps the most powerful method for performing tomographic imaging is using statistical inversion, also known as Bayesian statistics. Methods based on this approach are known to produce better images for limited angle tomography reconstructions. As a mathematical method it is not new, but it has long been regarded as computationally too intensive to be used in practical high resolution tomography applications. However, due to recent advances in algorithms (see, for example, the Finnish patent number FI 116324) and computational capabilities of computers, this method can be seen as a practical alternative.

Bayesian statistics is in essence based on inspecting the posteriori probability density function

$$p(x|m) = \frac{p(m|x)p(x)}{p(m)}$$

that allows us to make inferences about our measurements *m* together with prior information about the unknown x. In this equation the term *p(m|x)* is the probability of the measurements, given the model that explains the measurements. This is also known as the likelihood function and it contains the forward model of the tomographic measurement. The density *p(m)* is the probability of the measurements and it can be viewed as a normalization constant. Finally, the term *p(x)* is the so called prior probability density function. This prior probability density can be used to make prior assumptions about the statistical properties of the unknown x, which is vital for limited angle tomographic reconstruction.

All information of the object is contained within the posterior probability density. However, because this density function is very high-dimensional, it cannot be easily used for visualization. For this purpose, one has to form some sort of estimate. There are two common ways of forming such an estimate: the conditional mean (CM) estimate:

$$\hat{x}_{CM} = \int_{\Omega} x \frac{p(m|x)p(x)}{p(m)} dx$$

or the maximum a posteriori (MAP) estimate:

$$\hat{x}_{MAP} = \arg\max_{x} \left\{ \frac{p(m|x)p(x)}{p(m)} \right\}$$

The CM estimate $\hat{x}_{CM}$ can be seen as the statistically expected tomographic reconstruction, while the MAP estimate $\hat{x}_{MAP}$ can be seen as the tomographic reconstruction that maximizes the posterior probability density function. Of these estimates, the CM estimate is often regarded as more advantageous than the MAP estimate, because of the error characteristics (in the least-squares sense) of the CM estimate. In both cases, the nature of these estimators is to find a balance between the likelihood of the measurements $p(m|x)$ and the prior assumptions $p(x)$ of the statistical properties of the unknown x. In Bayesian statistics, the role of the prior distribution is to regularize the solution by adding constraints on the unknown x.

It has been found that despite all its advantages, statistical inversion may not give completely accurate results - or at least will not converge easily upon the most accurate estimate - in all cases. There is room for improvement in calculational efficiency and intelligent utilisation of the measurement results.

SUMMARY OF THE INVENTION

An advantageous aspect of the present invention is the provision of a method and an arrangement for performing tomographic reconstruction that is calculationally efficient and can be adapted to utilise various sets of measurement results obtained from the object to be examined. Another aspect of the present invention is the provision of a method and an arrangement that allow the adaptation of the tomographic reconstruction to take place automatically on the basis of characteristics found in the measurement results. Yet another aspect of the present invention is the provision of a method and an arrangement that also allow an operator to intervene in the adaptation of the tomographic reconstruction. Yet another aspect of the present invention is the provision of a method and an arrangement that allow combining auxiliary measurements of the object to the process of tomographic reconstruction.

Many advantageous aspects of the invention result from the use of so-called anisotropic priors in the tomographic reconstruction. The concept of anisotropic priors refers to allowing the prior probability density function to vary across a region to be examined, for example by allowing a regularisation parameter contained therein to acquire different values at different points or subsets of the region to be examined.

The prior probability density function, or just a prior for short, is a calculational tool that reflects what is already known about the examined object. As an example, priors are known that contain a parameter, the value of which is proportional to the probability that sharp transitions in attenuation (or other characteristic of interest) occur between neighboring locations in the object to be examined. Here, as well as at other locations in this text, the word "proportional" does not necessarily mean proportionality in its strict mathematical meaning, but the general concept that if one increases, also the other increases. Similarly if something is said to be inversely proportional, it means that if one increases, the other decreases. It is possible that some regions of the object are already known to contain sharper transitions than other regions, even before the tomographic reconstruction is performed. If a prior of the kind described above is used, the adaptation of the tomographic reconstruction may be accomplished by allowing the appropriate parameter in the prior to acquire higher values in those regions of the object where the sharper transitions are known or assumed to exist.

Adaptation can be made automatic and iterative by making the tomographic reconstruction algorithm contain a part that examines the processed data, identifies regions where a particular form of the prior would seem to suit best, and tunes the parameter values in the prior accordingly. This way the parameter(s) of the prior can be made to vary even point by point in the reconstruction model. The possibility of operator intervention comes in the form where an early version of the reconstructed image is shown to the operator, who can then use his or her prior knowledge about how the image should look like, and define the regions where different versions of the prior should apply.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objects and advantages thereof, will be best understood from the following description of specific embodiments when read in connection with the accompanying drawings.

BRIEF DESCRIPTION OF DRAWINGS

Fig. 1     illustrates a known arrangement for performing computerised tomography,
fig. 2     illustrates a parametrisation of a three-dimensional model,
fig. 3     illustrates a parametrisation of a two-dimensional model,
fig. 4     illustrates the division of a model into regions,
fig. 5     illustrates a practical example of dividing a model into regions,
fig. 6     illustrates an arrangement according to an embodiment of the invention,
fig. 7     illustrates a method according to an embodiment of the invention,
fig. 8     illustrates some alternative details of the method of fig. 7,
fig. 9     illustrates some alternative details of the method of fig. 7,
fig. 10     illustrates some alternative details of the method of fig. 7,
fig. 11     illustrates some alternative details of the method of fig. 7,
fig. 12     illustrates some alternative details of the method of fig. 7,
fig. 13     illustrates a computer program product according to an embodiment of the invention, and
fig. 14     illustrates an apparatus according to an embodiment of the invention.

DETAILED DESCRIPTION OF EMBODIMENTS OF THE INVENTION

In the case of limited angle tomographic reconstruction, there is not enough information in the measurements alone, so the prior assumptions play an important role, and the success of the tomographic reconstruction task relies on how well these prior assumptions reflect reality. If the prior is too restrictive, a loss of important information may occur. On the other hand, if the prior information is not restrictive enough, the result is a poor reconstruction with little or no resemblance with the actual measured object.

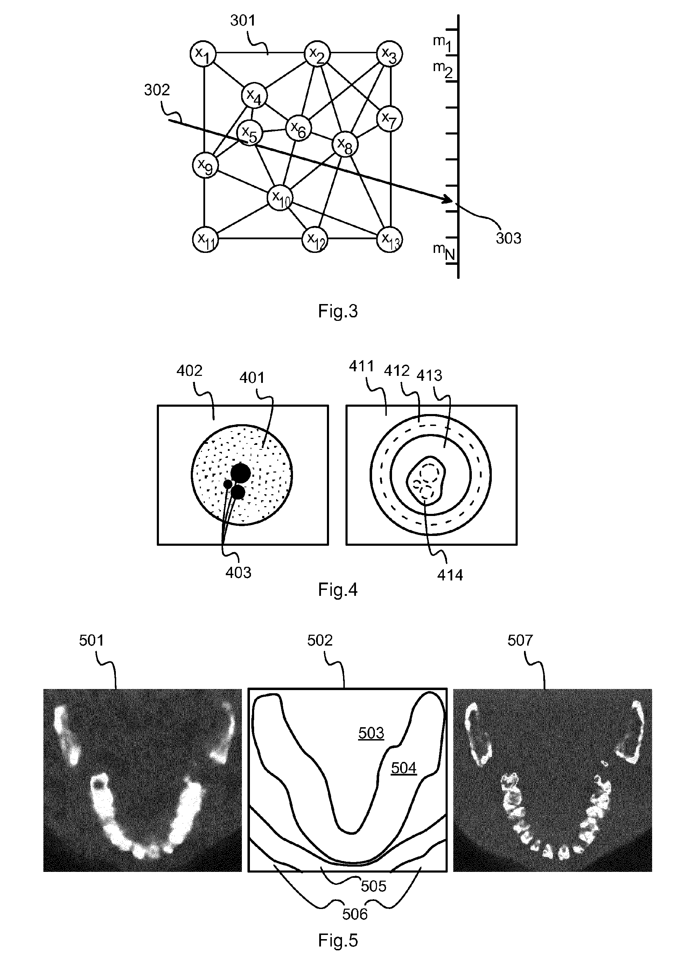

When formulating a forward model for tomography, one needs to parametrize the medium in some way. Fig 2 shows an exemplary way of doing this, by dividing the modelled region into equally spaced pixels (in the two-dimensional case) or voxels (in the three-dimensional case, illustrated in fig. 2). Fig. 3 illustrates an alternative parametrization of the medium by using an irregular grid 301. The forward theory of the propagation of the ray along the path of each ray passing from a radiation source to the detector can then be modelled using one of many possible interpolation methods. Examples of rays are shown as 201 in fig. 2 and 302 in fig. 3, and the detector is illustrated schematically as 202 in fig. 2 and 303 in fig. 3. The grid has an exaggeratedly coarse resolution in both fig. 2 and fig. 3 for demonstration purposes only. In practice the grid may contain thousands or even millions of points.

Ignoring possible calibration parameters, the likelihood function $p(m|x)$ of a tomographic model is completely defined by the set of model parameters $x_i$, which define the two- or three-dimensional map of attenuation coefficients (or other characteristic descriptors) of the medium. The subscript i refers in general to the way in which the model parameters are identified; for example in fig. 2 a three-dimensional indexing scheme is utilised (with the parameters of the 16 front voxels illustrated in fig. 2), and in fig. 3 a consecutive numbering scheme is utilised. Pixels of the detector are similarly indexed, so that in fig. 2 we have a two-dimensional detector of M x N pixels and an exemplary two-dimensional indexing scheme $m_{mn}$ of detector pixels, where the indices $m \in [1,M]$ and $n \in [1,N]$. Fig. 3 illustrates schematically a linear detector of N pixels $m_1$, $m_2$, ... $m_N$.

Typically prior information is given in the form of probability density functions that restrict the differences between neighbouring model parameter values of the tomographic reconstruction image. An example of such a probability density function is the following:

$$p(x) \propto \exp\left( - \sum_{i,j \in N} \frac{|x_i - x_j|^p}{\alpha_{i,j}} \right)$$

where N is a set of indices (i; j) that correspond to neighbouring model parameters *(i; j)* of the tomographic model (neighbouring model parameters are model parameters which are spatially adjacent to each other within the model grid). The parameter $\alpha_{i,j}$ determines how strongly we assert smoothness between neighbouring model values $x_i$ and $x_j$. Larger values of $\alpha_{i,j}$ allow larger differences between neighbouring model parameters, and smaller values allow smaller differences, more strongly enforcing smoothness of the model. For irregular grids, the distance between the two points also has to be factored into $\alpha_{i,j}$ in order to consistently enforce smoothness.

Using *p* = 1 for the exponent in the prior density results in total-variation regularization (also known as TV-regularization). Alternatively, the value *p* = 2 would result in the assumption that the differences between the neighbouring model parameters are normal (Gaussian) distributed. The form of regularization that uses *p* = 1 does not penalize sharp transitions as heavily as the Gaussian assumption would.

Another alternative to TV regularization is to assume that the differences are Cauchy distributed, with a probability density function

$$p(x) = \prod_{i,j \in N} \frac{1}{\pi \alpha_{i,j} \left[ 1 + \left( \frac{x_i - x_j}{\alpha_{i,j}} \right)^2 \right]}$$

which has the advantage that the prior density is differentiable everywhere and is scale invariant. Because the distribution has very long tails, it also doesn't unnecessarily discourage sharp transitions in the reconstructed image as Gaussian priors would. In this sense, it can be viewed as an alternative for TV-regularization.

In all of these methods, the parameter $\alpha_{i,j}$ that describes how close to each other the neighbouring values $x_i$ and $x_j$ are assumed to be, can be defined differently for each difference (i; j). If a larger value of $\alpha_{i,j}$ is used, we allow larger differences to occur between $x_i$ and $x_j$. If a smaller value is used, we enforce the neighbouring model parameters $x_i$ and $x_j$ to have values close to each other, i.e., we enforce this region to be more smooth.

There are also other forms of regularization that can be used. For example, it is possible to regularize the value of the model parameters themselves, instead of their differences. Regions in the tomographic reconstruction that are a *priori* known to have a certain value can be regularized to have that value by assuming that they are inverse Gaussian distributed

$$p(x) = \prod_i \left[ \frac{\lambda_i}{2\pi x_i^3} \right]^{\frac{1}{2}} \exp\left( - \frac{\lambda_i (x_i - \mu_i)^2}{2\mu_i^2 x_i} \right)$$

where $\mu_i$ is the expected value of the tomographic reconstruction for the unknown value for parameter $x_i$, and $\lambda_j$ defines the width of the distribution, or how much variation is allowed around the prior assumption. Again, this prior information is highly localized, meaning that we can make different assumptions $\mu_i$ even for each individual one of our model variables $x_i$ if need be. Also other distributions can be used for this purpose.

The most typical form of regularization is only done on the differences of the model *parameters $x_i$ - $x_j$*. As shown above, it is also possible, if deemed necessary, to regularize the values of the model parameters $x_i$ themselves. These two forms of regularization can also be performed simultaneously by multiplying their corresponding prior probability densities.

In a more generalized sense, one can think of the regularization with the prior density function *p(x)* as regularization that allows us to enforce various properties on the reconstruction which are localized around a neighbourhood around each of the model parameters $x_i$. The prior information used to regularize the problem doesn't necessarily have to be resctricted to the above examples. The neighbourhood can be a larger region of parameters around $x_i$ if necessary. According to an aspect of the invention, this prior information can be defined in a localized manner and that different localized regions of the model *x* can be assigned different prior information.

It is typical to prior art tomographic reconstruction based on statistical inversion that it uses a *uniform* regularization parameter $\alpha_{i,j}$ over the whole model in the prior probability density function $p(x)$. As a clear difference, according to an aspect of the present invention, an *anisotropic* or *heterogeneous* form of prior information is used in the tomographic reconstruction, which significantly improves the reconstruction results compared to the uniform regularization parameter selection.

The model can be divided into two or more regions, where different values of the localized prior regularization parameters are used. In most cases, this involves using different difference regularization parameters $\alpha_{i,j}$, corresponding to our knowledge of how smooth the unknown tomographic model is at these different regions. Additionally or alternatively, regularization can be added to the absolute value of the model parameters using $\mu_i$ and $\lambda_i$ for certain regions of the model.

In order to properly tune the regularization parameters, we need to be able to identify the different regions that are to be regularized with different prior regularization values. Such information can be obtained with at least two different means: iteratively only using the measurements, or the reconstruction can be assisted by using external knowledge of the measured object itself. These two approaches can also be mixed and used together.

The iterative method relies on a first order default reconstruction utilizing a uniform regularization coefficient (or coefficients, in case there are more than one in the prior). One then estimates from this initial reconstruction the pointwise variation for each point and uses that estimate to adjust regularization parameter(s) separately for each point. This way might work better if the object doesn't contain naturally separable areas. On the other hand, as part of the variation in the reconstruction is artificial, one should do the adjustment carefully so that the algorithm doesn't start to increase that artificial variation, and repeat the iteration of regularization parameter adjustment and reconstruction recalculation many times. The advantage of this method is that it is not application specific, and it will work with any type of tomography.

The assisted method involves dividing the reconstruction model to a finite number (in practice a few) of separate areas and using inside each area a constant value, typical to that area. This way is suitable for example to dental tomography, where the small variation areas are nearly homogeneous and almost all of the variation in the measurements comes from the bone structures or the borders between bones and soft tissue (or from borders between soft tissue and air). Dividing the structure into different regions can be done automatically or manually by the operator of the tomography equipment. Additional measurements of the boundary of the object, provided by, e.g., stereoscopic cameras, a laser scanner, or mechanical means can also be used to assist in determining the location of the boundary of the object. Also, a library of templates based on anatomical properties of the objects can be used to assist the segmentation of the object into regions with different regularization parameters.

Fig. 4. illustrates the principle of using anisotropic or heterogeneous prior information through an example. In the case of fig. 4, the circular object 401 with a certain attenuation different from the outside of the object 402 is being measured. This object also has inside of it three circular regions 403 with again different attenuation properties. In order to utilize anisotropic prior information in this case, one divides the model into four different regions 411, 412, 413, and 414. In these regions one would use different values for the regularization parameters. The borders of the structural entities involved are shown on the right in fig. 4 in order to illustrate their location in relation to the regions 411, 412, 413, and 414.

In region 411 one could choose to regularise differences $x_i - x_j$ in such a way that it strongly enforces smoothness, by using a relatively small value for $\alpha_{i,j}$. In addition to this, one could enforce the attenuation $x_i$ in this region to be close to that of air. Within the region 412 where the transition from air to the body occurs, one could allow larger values for **differences** $x_i - x_j$ by selecting a larger value for $\alpha_{i,j}$ in this region. One could also select not to regularise the absolute value $x_i$ in any way. In the region 413 of uniform attenuation within the body one could again enforce smoother values by regularising the differences with an $\alpha_{i,j}$ that is smaller than the one in region 412 but larger than the one in region 411. Finally, in the area 414 with sharp features, one could use a fairly large value for $\alpha_{i,j}$ to allow for large discontinuities within this region.

Fig. 5 depicts a practical example of applying a method and an arrangement according to an embodiment of this invention for limited angle dental tomography. The initial default reconstruction 501 with uniform difference TV-regularization parameter $\alpha_{i,j}$ is shown on the left. From this initial reconstruction, an automatic algorithm or the operator of the arrangement has determined the set of regions 502, so that different values of regularization parameters can be used within different regions. Region 503 is the one with essentially only soft tissue, region 504 contains the teeth and bone structures, region 505 contains the border between soft tissue and air, and region 506 contains essentially only air. The largest differences are allowed in regions 504 and 505, while the other regions are assumed to be fairly smooth. The improved reconstruction 507 is obtained using this anisotropic prior. From this improved reconstruction, it is again possible to refine the prior information further and possibly improve the reconstruction even further.

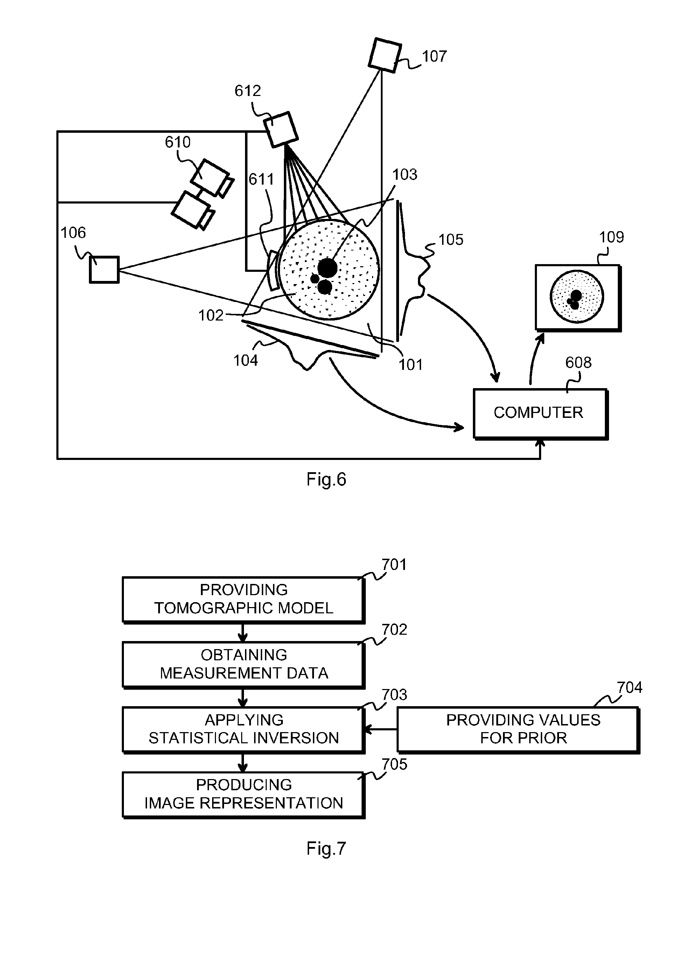

Auxiliary measurements of the object to be examined may assist in providing information of a boundary of and/or boundaries within the object, which information may then be used for selecting those grid points that should be associated with regularization parameter values that favour sharp transitions. Fig. 6 illustrates an arrangement, in which the basic setup for sparse angle X-ray imaging is similar to that in fig. 1. As examples of instruments capable of performing auxiliary measurements, fig. 6 illustrates a stereographic camera 610, a mechanical measurement arm 611 and a laser scanner 612. The computer 608 is illustrated with a different reference designator than in fig. 1 in order to emphasize that it is configured to execute a method according to an embodiment of the invention, which may (but does not have to) include the collection of auxiliary measurement information and its use in defining the regions in the tomographic model.

Fig. 7 is a schematical representation of a method according to an embodiment of the invention. As illustrated by step 701, the method comprises representing an object to be examined with a tomographic model that comprises grid points. The grid points have a well-known spatial relationship to actual physical locations within the object to be examined, so that each grid point can be said to represent a particular physical location. Therefore it is also very intuitive to say that some of the grid points represent locations in the object to be examined where sharp transitions of attenuation occur, while other grid points represent locations that are within relatively homogeneous parts of the object to be examined.

As illustrated by step 702, the method comprises obtaining a set of measurement data representative of attenuation that is experienced by radiation that propagated through such parts of the object to be examined that in said tomographic model are represented by said grid points. In a typical case, a number of X-ray images are taken from a number of different angles around the object, so that the set of measurement data is a collection of exposure values read from the pixels of an X-ray detector. The exposure value of a pixel in an individual X-ray image has an inverse relationship to the attenuation experienced by radiation that the X-ray source emitted into the spatial angle that - looking from the X-ray source - covers that particular pixel. In other words, the less attenuation the radiation experiences on its way from the radiation source towards a particular pixel, the higher will be the exposure value of that pixel.

As illustrated by step 703, the method comprises applying statistical inversion to convert said set of measurement data into a calculated distribution of attenuation values associated with at least a number of said grid points. Using the expression "at least a number of said grid points" emphasizes the fact that the distribution of attenuation values that is obtained through a particular calculation does not necessarily aim at covering the whole object to be examined. For example, it is possible to limit the calculation to a subset of grid points that correspond to an essentially two-dimensional slice of the object to be examined. Another example is a case in which the radiation to be used for imaging is energetic enough so that it does not get attenuated in air to any significant degree. If for example an auxiliary measurement of the object to be examined reveals the outer boundary of the object, grid points that only represent regions of surrounding air can be ignored in the calculation.

As illustrated by step 704, the step of applying statistical inversion comprises associating values of a prior probability density function with said grid points. The shorter designation "prior" can be used. In accordance with the principles discussed earlier, the prior comprises at least one regularization parameter, and the values of said prior for different grid points come from using different values of said regularization parameter.

As illustrated by step 705, the method comprises producing an image representation of said calculated distribution of attenuation values. This can be done for example by representing different attenuation values with the pixel value correspondents of different colours and/or with different shades of a particular colour, and showing a projection of such pixel values on a screen or other displaying device. The image representation produced at step 705 can be alternatively or additionally be stored into a computer-readable memory as an image file.

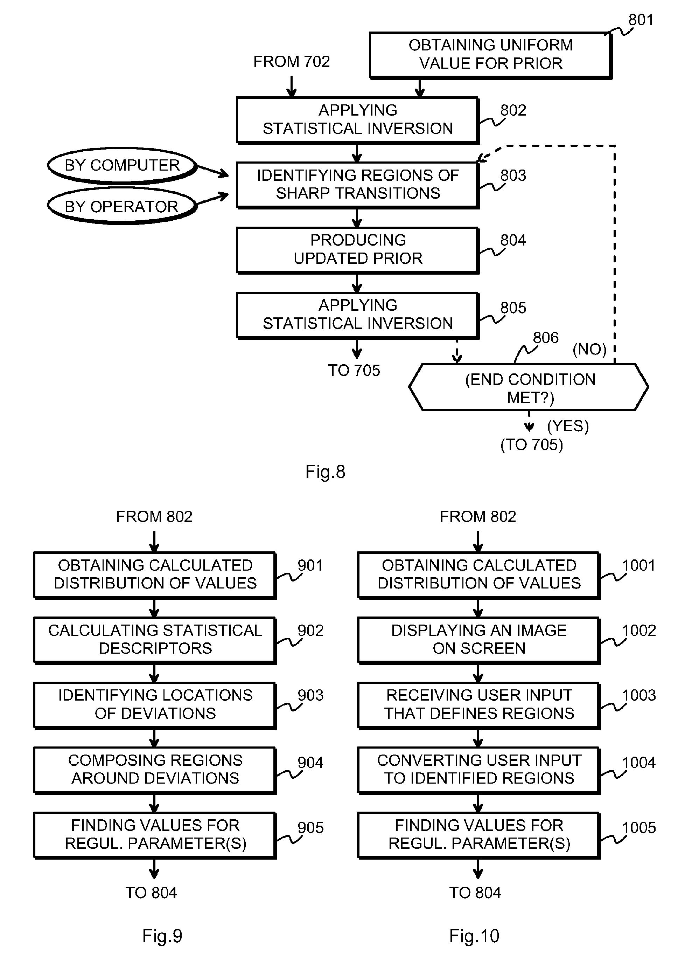

Fig. 8 illustrates a detail of a method according to an embodiment of the invention in a case where we assume that values of said regularization parameter are proportional to probability of sharp transitions of attenuation in a neighbourhood of a grid point with which a value of the prior is associated. We also assume that when the set of measurement data is first processed, no more detailed information is available yet that would allow making assumptions about where in the object to be examined the regions of sharp transitions would exist. Therefore the method of fig. 8 comprises first obtaining uniform values for the regularization parameter - and hence for the prior - at step 801. Correspondingly, statistical inversion is applied at step 802 first to convert said set of measurement data into a first calculated distribution of attenuation values, using the default prior that includes the uniform value of the regularization parameter.

As illustrated by step 803, the method of fig. 3 then comprises identifying, within the first calculated distribution of attenuation values, regions of the tomographic model where sharp transitions of attenuation occur. This identification can involve automatic identification done by computer, and/or manual identification done by a human operator.

Automatically identifying regions of the tomographic model where sharp transitions of attenuation occur is performed by a computer that examines the differences in attenuation values between grid points in the first calculated distribution of attenuation values. A schematic example of an algorithm is illustrated in fig. 9. After obtaining a calculated distribution of attenuation values at step 901, the algorithm proceeds so that at step there are calculated some statistical descriptors of what are the mean, median, or other typical differences between attenuation values of adjacent or nearly adjacent grid points. At step 902 grid points and/or grid point groups are identified for which the differences between attenuation values deviate significantly from the typical differences. At step 904 a margin is defined around such identified grid points and/or grid point groups, thus initially defining regions. Optimisation is carried out in order to find out, whether - taken the surrounding margins - some of the regions should be combined to obtain the regions that form the eventual output of the automatic identification. At step 905 values are found for the regularization parameter(s), for example by using a look-up table in which particular values correspond to particular kinds of found deviations, and/or by performing some kind of mathematical interpolation between regularization parameter values indicative of very sharp transitions and others indicative of very smooth regions.

The other possibility mentioned above, i.e. manually identifying regions of the tomographic model where sharp transitions of attenuation occur, means that in the method executed by a computer, the identification is performed as a response to an input received from a human user. A schematic example is given in fig. 10. After obtaining a calculated distribution of attenuation values at step 1001, the method of fig. 10 proceeds so that a graphical representation of the first calculated distribution of attenuation values is displayed on a screen at step 1002. The human user uses a mouse, or slides a finger across a touch-sensitive display, or uses any other corresponding pointing device to draw border lines around the regions that seem to contain the most important sharp transitions. At step 1003 the computer tracks the movements of the pointing device in relation to the graphically represented distribution of attenuation values, or otherwise translates the user input into machine-readable form that relates it to the grid points, the first calculated attenuation values of which were displayed. At step 1004 the computer forms the regions by identifying grid points that become enclosed or separated from the other grid points by the contours drawn by the user. Step 1005 corresponds to step 905 of fig. 5, possibly with the difference that since user interaction is involved in any case, step 1005 may involve giving the user a possibility to affect the selection of values for the regularization parameter(s).

Referring back to fig. 8, the method of fig. 8 comprises producing an updated prior by selecting different values for the regularization parameter in association with those grid points that are within the identified regions than in association with those grid points that are not. In the simplest case there are two classes of regions: those which were identified as containing sharp transitions, and those which were not (or were identified as containing very homogeneous attenuation). In such a case, it may be sufficient to use two different values for the regularization parameter. In an extreme case (which is typically only applicable to automatic identifying of regions), each and every grid point may be considered to constitute a "region", so that the computer allocates grid-point-specific values for the regularization parameters from a very wide range of available regularization parameter values. In the last-mentioned case the computer should be configured to classify the grid points according to a relatively fine-stepped classification scheme that tells what is the assumed probability of sharp transitions in the immediate neighbourhood of each individual pixels.

As illustrated by step 805, the method of fig. 8 comprises using said updated prior and applying statistical inversion anew to convert said set of measurement data into an updated calculated distribution of attenuation values. If the identification of regions was done properly at step 803, the updated calculated distribution of attenuation values should then be a more accurate representation of the actual spatial distribution of attenuation in the object to be examined.

The schematic illustration given in fig. 8 can also be used to illustrate the general principle of iteratively improving the calculation results. Step 802 may be construed to represent some particular step of applying statistical inversion to convert the set of measurement data into a calculated distribution of attenuation values. Irrespective of whether automatic or operator-assisted identification (or both) is used to identify the regions of sharp transitions, the method may comprise repeatedly producing an updated prior by selecting different values for the regularization parameter and applying statistical inversion anew to convert said set of measurement data into an updated calculated distribution of attenuation values, each time with a return from step 805 to step 803, until a predetermined end condition is met. The iteration loop is illustrated with step 806 and the dashed arrows in fig. 8. The predetermined end condition may be for example a finding, according to which a new calculation round did not give any more significant changes to the calculated distribution of attenuation values, or the expiry of a time limit or maximum number of iteration rounds, or some other criterion.

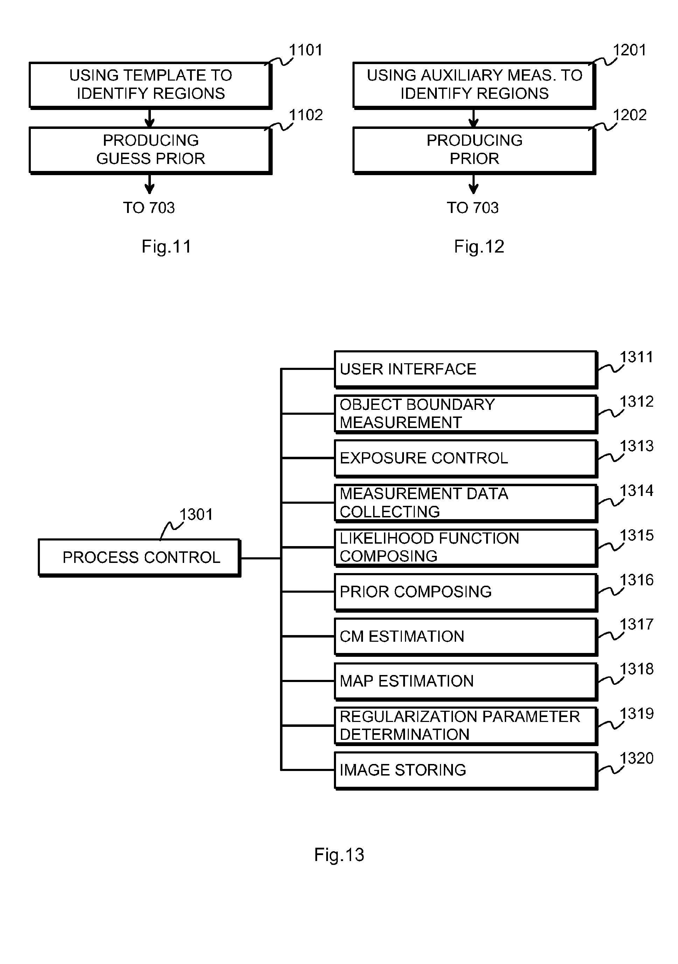

Fig. 11 illustrate schematically the possibility of using a template of the object to be examined in order to identify regions of the tomographic model where sharp transitions are likely to occur. For example when a dental region is imaged like in fig. 5 above, an assumption can be relatively confidently made that the image will comprise a central curved region with a significant number of sharp transitions, a lower curved region where a transition will illustrate the outer surface of soft tissue, as well as a number of relatively smooth regions. Therefore one could use, even before a first calculation round of statistical inversion, such an approximate template to produce a guess prior, in which the regularization parameter values already reflected the assumptions that the template represents. In fig. 11, steps 1101 and 1102 represent producing a guess prior by selecting different values for the regularization parameter in association with those grid points that are within the identified regions than in association with those grid points that are not. A subsequent calculation round would involve using said guess prior and applying statistical inversion to convert said set of measurement data into a calculated distribution of attenuation values.

Instead of or in addition to using a template, one may use an auxiliary measurement to produce information of a boundary of said object, as illustrated in step 1201 of fig. 12. A subsequent step 1202 involves producing a prior by selecting boundary-specific values for the regularization parameter in association with those grid points that according to said information are in a neighbourhood of the boundary of said object. The embodiments illustrated in figs. 11 and 12 may be combined for example so that the results of the auxiliary measurement are used to correctly place the template with respect to the grid points.

Above in the description of figs. 7 to 12 it was repeatedly assumed that the regularization parameter that was used to tune the prior was a value associated with differences of attenuation value between grid points. However, as was pointed out earlier, the value of said regularization parameter may also be descriptive of mere attenuation in a neighbourhood of a grid point with which a value of the prior is associated. The illustrations given in figs. 7 to 12 are just as well applicable in such a case, with just evident changes; for example in fig. 8, the step 803 of identifying regions of sharp transitions should be replaced (or augmented) with the step of identifying regions where reliable information is known about the attenuation values that should be associated with certain grid points.

Also above figs. 7 to 12 were described as illustrative of the method aspect of the invention. However, they can similarly be construed as indicative of the aspect of the invention that involves a computer program product. It comprises machine-readable instructions that, when executed by a computer, cause the computer implement a method that comprises the steps that have been described above.

Fig. 13 is a schematic illustration of the organization of the machine-readable instructions in an exemplary computer program product of said kind. The overall control of the process is contained in a process control section 1301, which has bidirectional communications with all other sections of the machine-readable instructions. A user interface section 1311 is responsible for exchanging information with a human user, for example displaying image representations graphically and receiving user input that may contain indications of which grid points are included in which regions. An object boundary measurement section 1312 comprises the machine-readable instructions that concern the task of making the so-called auxiliary measurements. An exposure control section 1313 comprises the machine-readable instructions that control the illumination of the object to be examined with X-rays. A measurement data collection section 1314 comprises the machine-readable instructions that control the acquisition of measurement data from the X-ray detectors and/or possible other sources of measurement data. A likelihood function composing section 1315 comprises the machine-readable instructions that control the forming of the forward model of the tomographic measurement and the term $p(m|x)$, i.e. the probability of the measurements, given the model that explains the measurements.

A prior-composing section 1316 comprises the machine-readable instructions that control the forming of the prior probability density function, which is also known as the prior for short. A CM estimation section 1317 comprises the machine-readable instructions that control the calculation of the so-called CM or conditional mean estimate. A MAP estimation section 1318 comprises the machine-readable instructions that control the calculation of the so-called MAP or maximum a posterior estimate. Sections 1317 and 1318 are not necessarily both needed, if the application of the invention will be based on using only one kind of estimates.

A regularization parameter determination section 1319 comprises the machine-readable instructions that control the anisotropy of the prior, i.e. the selection of different regularization parameter values for different (regions of) grid points, so that the anisotropic prior acquires the characteristics that reflect the existing knowledge of which parts of the object to be examined are most likely to contain the sharp transitions (or certain attenuation values). An image storing section 1320 comprises the machine-readable instructions that control the storing of image representations.

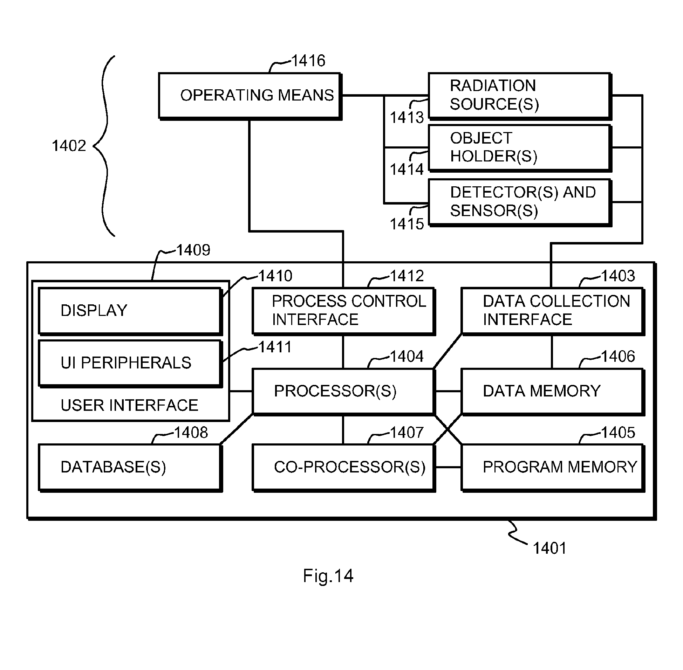

Fig. 14 is a schematic representation of an apparatus according to an embodiment of the invention. Major parts of the apparatus of fig. 14 are a computer section 1401 and an X-ray imaging section 1402. The former comprises a data collection interface 1403 configured to obtain a set of measurement data representative of attenuation experienced by radiation that propagated through parts of an object to be examined. In the apparatus of fig. 14 this is illustrated as a direct communications connection from the X-ray imaging section 1402, but it should be noted that tomographic reconstruction according to embodiments of the invention can be performed also in standalone computer devices, which do not have an X-ray imaging section of their own but receive measurement data that has been previously produced elsewhere.

The computer section 1401 comprises a processor 1404 that is configured to represent the object to be examined with a tomographic model that comprises grid points that represent parts of the object to be examined and to apply statistical inversion to convert said set of measurement data into a calculated distribution of attenuation values associated with at least a number of said grid points. The program that the processor executes is stored in a program memory 1405. There may be a separate data memory 1406 for storing data, and there may be co-processors 1407 (such as arithmetical processors) that take part in making the calculations. The processor 1404 may also have one or more databases 1408 at its disposal for storing and retrieving large amounts of data and for storing function libraries and other kinds of resources.

The processor 1404 is configured to associate, as a part of applying statistical inversion, values of a prior probability density function with said grid points. The prior comprises at least one regularization parameter, and the values of the prior for different grid points come from using different values of the regularization parameter. The processor 1404 is also configured to produce an image representation of said calculated distribution of attenuation values. For producing graphical projections of said image representation, the computer section 1401 of fig. 14 comprises a user interface 1409, which in fig. 14 is shown to comprise at least a display 1410 and some user interface peripherals 1411. Such peripherals may be used for example to convey user input from a human user to the processor. The user input may contain e.g. an indication of which grid points are included in regions for which particular values of the regularization parameter are to be used.

A process control interface 1412 links the computer section 1401 with the X-ray imaging section 1402, which is configured to controllably irradiate the object to be examined with X-rays and to detect intensities of X-rays that passed through parts of the object to be examined in order to produce the previously mentioned set of measurement data. Parts of the X-ray imaging section 1402 that are shown in fig. 14 are the radiation source(s) 1403, the object holder(s) 1414, and one or more detector or sensor 1415. Operating means 1416 are shown as the control entity that operates the radiation source(s) 1403, the object holder(s) 1414, and the detectors and/or sensors 1415 according to the commands it receives from the computer section 1401.

A major advantage of embodiments of the present invention is the provision of more accurate calculated distributions of attenuation values, and hence more accurate images, with fewer exposures, because the anisotropic prior allows finding a CM-, a MAP-, or other estimate that exhibits a very good fit with the actual properties of an object to be examined. The exemplary embodiments of the invention that have been described above should not be construed to place limitations to the scope of protection that is defined by the appended claims.

## Claims

1. A method for performing tomographic reconstruction, comprising:

   - representing an object to be examined with a tomographic model that comprises grid points,
   - obtaining a set of measurement data representative of attenuation experienced by radiation that propagated through such parts of the object to be examined that in said tomographic model are represented by said grid points, and
   - applying statistical inversion to convert said set of measurement data into a calculated distribution of attenuation values associated with at least a number of said grid points;
   wherein the step of applying statistical inversion comprises associating values of a prior probability density function, hereinafter prior, with said grid points, which prior comprises at least one regularization parameter, and wherein the values of said prior for different grid points come from using different values of said regularization parameter,
   and wherein the method comprises producing an image representation of said calculated distribution of attenuation values.

2. A method according to claim 1, wherein values of said regularization parameter are proportional to probability of sharp transitions of attenuation in a neighbourhood of a grid point with which a value of the prior is associated.

3. A method according to claim 2, comprising:

   - applying statistical inversion first to convert said set of measurement data into a first calculated distribution of attenuation values, using a default prior that includes a uniform value of said regularization parameter,
   - identifying, within said first calculated distribution of attenuation values, regions of the tomographic model where sharp transitions of attenuation occur,
   - producing an updated prior by selecting different values for the regularization parameter in association with those grid points that are within the identified regions than in association with those grid points that are not, and
   - using said updated prior, applying statistical inversion anew to convert said set of measurement data into an updated calculated distribution of attenuation values.

4. A method according to claim 3, wherein the step of identifying regions of the tomographic model where sharp transitions of attenuation occur is performed automatically by a computer that examines the differences in attenuation values between grid points in the first calculated distribution of attenuation values.

5. A method according to claim 3, wherein the step of identifying regions of the tomographic model where sharp transitions of attenuation occur is performed as a response to an input received from a user, said input containing an indication of which grid points are included in said regions.

6. A method according to claim 2, comprising:

   - using a template of said object in order to identify regions of the tomographic model where sharp transitions are likely to occur,
   - producing a guess prior by selecting different values for the regularization parameter in association with those grid points that are within the identified regions than in association with those grid points that are not, and

- using said guess prior, applying statistical inversion to convert said set of measurement data into a calculated distribution of attenuation values.

7. A method according to claim 2, comprising:

   - using an auxiliary measurement to produce information of a boundary of said object, and
   - producing a prior by selecting boundary-specific values for the regularization parameter in association with those grid points that according to said information are in a neighbourhood of the boundary of said object.

8. A method according to claim 1, wherein the value of said regularization parameter is descriptive of attenuation in a neighbourhood of a grid point with which a value of the prior is associated.

9. A method according to claim 1, wherein:

   - after said step of applying statistical inversion to convert said set of measurement data into a calculated distribution of attenuation values, the method comprises repeatedly producing an updated prior by selecting different values for the regularization parameter and applying statistical inversion anew to convert said set of measurement data into an updated calculated distribution of attenuation values, until a predetermined end condition is met.

10. An apparatus for performing tomographic reconstruction, comprising:

   - a data collection interface configured to obtain a set of measurement data representative of attenuation experienced by radiation that propagated through parts of an object to be examined, and
   - a processor configured to represent the object to be examined with a tomographic model that comprises grid points that represent parts of the object to be examined and to apply statistical inversion to convert said set of measurement data into a calculated distribution of attenuation values associated with at least a number of said grid points;
   wherein the processor is configured to associate, as a part of applying statistical inversion, values of a prior probability density function, hereinafter prior, with said grid points, which prior comprises at least one regularization parameter, wherein the values of said prior for different grid points come from using different values of said regularization parameter,
   and wherein the processor is configured to produce an image representation of said calculated distribution of attenuation values.

11. An apparatus according to claim 10, comprising an X-ray imaging section configured to controllably irradiate the object to be examined with X-rays and to detect intensities of X-rays that passed through parts of the object to be examined in order to produce said set of measurement data.

12. An apparatus according to claim 10, comprising user interface means configured to present a graphical projection of said image representation to a human user.

13. An apparatus according to claim 12, wherein said user interface means are also configured to convey user input from said human user to said processor, said user input containing an indication of which grid points are included in regions for which particular values of said regularization parameter are to be used.

14. A computer program product, comprising machine-readable instructions that, when executed by a computer, cause the computer implement a method that comprises

   - representing an object to be examined with a tomographic model that comprises grid points,
   - obtaining a set of measurement data representative of attenuation experienced by radiation that propagated through such parts of the object to be examined that in said tomographic model are represented by said grid points, and
   - applying statistical inversion to convert said set of measurement data into a calculated distribution of attenuation values associated with at least a number of said grid points;
   wherein the step of applying statistical inversion comprises associating values of a prior probability density function, hereinafter prior, with said grid points, which prior comprises at least one regularization parameter,
   and wherein the values of said prior for different grid points come from using different values of said regularization parameter,
and wherein the method comprises producing an image representation of said calculated distribution of attenuation values.

Fig.1
PRIOR ART

Fig.2

Fig.3

Fig.4

Fig.5

Fig.6

Fig.7

Fig.8

Fig.9

Fig.10

## Fig.11

```
USING TEMPLATE TO        1101
IDENTIFY REGIONS

        ↓

   PRODUCING            1102
  GUESS PRIOR

        ↓

    TO 703
```

Fig.11

## Fig.12

```
USING AUXILIARY MEAS. TO   1201
IDENTIFY REGIONS

        ↓

    PRODUCING           1202
     PRIOR

        ↓

    TO 703
```

Fig.12

```
                              USER INTERFACE              1311

                              OBJECT BOUNDARY             1312
                              MEASUREMENT

                              EXPOSURE CONTROL            1313

                              MEASUREMENT DATA            1314
                              COLLECTING

          1301                LIKELIHOOD FUNCTION         1315
                              COMPOSING

  PROCESS CONTROL             PRIOR COMPOSING             1316

                              CM ESTIMATION               1317

                              MAP ESTIMATION              1318

                              REGULARIZATION PARAMETER    1319
                              DETERMINATION

                              IMAGE STORING               1320
```

Fig.13

1416

OPERATING MEANS

RADIATION SOURCE(S)

1413

OBJECT HOLDER(S)

1414

DETECTOR(S) AND SENSOR(S)

1415

1402

1409

1410

DISPLAY

1412

PROCESS CONTROL INTERFACE

1403

DATA COLLECTION INTERFACE

1411

UI PERIPHERALS

USER INTERFACE

1404

PROCESSOR(S)

1406

DATA MEMORY

1408

DATABASE(S)

1407

CO-PROCESSOR(S)

1405

PROGRAM MEMORY

1401

Fig.14

Europäisches
Patentamt
European
Patent Office
Office européen
des brevets

**EUROPEAN SEARCH REPORT**

Application Number

EP 12 39 7528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | J P Kaipio ET AL: "Inverse problems with structural prior information", Inverse Problems, Volume 15, Number 3, 1 June 1999 (1999-06-01), pages 713-729, XP055055632, DOI: 10.1088/0266-5611/15/3/306 Retrieved from the Internet: URL:http://iopscience.iop.org/0266-5611/15 /3/306/pdf/0266-5611_15_3_306.pdf [retrieved on 2013-03-07] | 1,2,6-8, 10-14 | INV. G06T11/00 |
| Y | * abstract * * figure 6 * * Section 2 * * Section 5 * * Section 3 * * Eq. 12 * * figure 7 * | 3-5,9 | |
| | ----- | | |
| X | V KOLEHMAINEN ET AL: "Statistical inversion for medical x-ray tomography with few radiographs: II. Application to dental radiology", PHYSICS IN MEDICINE AND BIOLOGY, vol. 48, no. 10, 21 May 2003 (2003-05-21), pages 1465-1490, XP055055637, ISSN: 0031-9155, DOI: 10.1088/0031-9155/48/10/315 | 1,2,6-8, 10-14 | |
| Y | * abstract * * Section 3.3 * | 3-5,9 | TECHNICAL FIELDS SEARCHED (IPC) G06T |
| | ----- | | |
| | -/-- | | |

The present search report has been drawn up for all claims

| Place of search | Date of completion of the search | Examiner |
|---|---|---|
| Munich | 8 March 2013 | Leclercq, Philippe |

EPO FORM 1503 03.82 (P04C01)

| | Europäisches Patentamt European Patent Office Office européen des brevets | EUROPEAN SEARCH REPORT | Application Number EP 12 39 7528 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARRIDGE S R ET AL: "Approximation errors and model reduction with an application in optical diffusion tomography; Approximation errors and model reduction in ODT", INVERSE PROBLEMS, INSTITUTE OF PHYSICS PUBLISHING, BRISTOL, GB, vol. 22, no. 1, 1 February 2006 (2006-02-01), pages 175-195, XP020097980, ISSN: 0266-5611, DOI: 10.1088/0266-5611/22/1/010 | 1,2,6-8, 10-14 | |
| Y | * abstract * * Section 2.3 * * Section 3.1 * | 3-5,9 | |
| Y | US 2008/304726 A1 (FESSLER JEFFREY ALLEN [US] ET AL) 11 December 2008 (2008-12-11) * abstract * * figure 3 * * paragraph [0021] - paragraph [0030] * | 3-5,9 | |
| A | WO 2004/019782 A1 (INSTRUMENTARIUM CORP [FI]; SILTANEN SAMULI [FI]; SOMERSALO ERKKI [FI];) 11 March 2004 (2004-03-11) * abstract * * page 3 - page 17 * | 1-14 | TECHNICAL FIELDS SEARCHED (IPC) |
| A | V KOLEHMAINEN ET AL: "Statistical inversion for medical x-ray tomography with few radiographs: II. Application to dental radiology", PHYSICS IN MEDICINE AND BIOLOGY, vol. 48, no. 10, 21 May 2003 (2003-05-21), pages 1465-1490, XP055055650, ISSN: 0031-9155, DOI: 10.1088/0031-9155/48/10/315 * the whole document * | 1-14 | |

-/--

The present search report has been drawn up for all claims

| Place of search | Date of completion of the search | Examiner |
|---|---|---|
| Munich | 8 March 2013 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 12 39 7528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2010/310144 A1 (CHEN GUANG-HONG [US] ET AL) 9 December 2010 (2010-12-09) * the whole document * | 1-14 | |
| A | PIERRE BLEUET ET AL: "<title>Resolution improvement in linear tomosynthesis with an adapted 3D regularization scheme</title>", PROCEEDINGS OF SPIE, vol. 4682, 2 May 2002 (2002-05-02), pages 117-125, XP055055653, ISSN: 0277-786X, DOI: 10.1117/12.465549 * the whole document * | 1-14 | |

TECHNICAL FIELDS
SEARCHED      (IPC)

The present search report has been drawn up for all claims

| Place of search | Date of completion of the search | Examiner |
|---|---|---|
| Munich | 8 March 2013 | Leclercq, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**            EP 12 39 7528

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2013

| Patent document cited in search report | | Publication date | Patent family member(s) | | Publication date |
|---|---|---|---|---|---|
| US 2008304726 | A1 | 11-12-2008 | CN | 101681429 A | 24-03-2010 |
| | | | EP | 2150918 A2 | 10-02-2010 |
| | | | JP | 2010528764 A | 26-08-2010 |
| | | | US | 2008304726 A1 | 11-12-2008 |
| | | | WO | 2008154070 A2 | 18-12-2008 |
| WO 2004019782 | A1 | 11-03-2004 | AU | 2003255550 A1 | 19-03-2004 |
| | | | DE | 10393159 T5 | 15-09-2005 |
| | | | JP | 4339255 B2 | 07-10-2009 |
| | | | JP | 2005536308 A | 02-12-2005 |
| | | | US | 2006104406 A1 | 18-05-2006 |
| | | | WO | 2004019782 A1 | 11-03-2004 |
| US 2010310144 | A1 | 09-12-2010 | EP | 2441051 A1 | 18-04-2012 |
| | | | US | 2010310144 A1 | 09-12-2010 |
| | | | WO | 2010144272 A1 | 16-12-2010 |

EPO FORM P0459

For more details about this annex : see Official Journal of the European Patent Office, No. 12/82

**EP 2 587 453 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 116324